## Europäisches Patentamt
## European Patent Office
## Office européen des brevets

(19)

(11) Veröffentlichungsnummer: **0 158 868**
**B1**

(12)

# EUROPÄISCHE PATENTSCHRIFT

(45) Veröffentlichungstag der Patentschrift:
31.01.90

(51) Int. Cl.⁴: **B 23 B 39/16**

(21) Anmeldenummer: 85103444.7

(22) Anmeldetag: 23.03.85

(54) **Mehrspindelkopf.**

(30) Priorität: 14.04.84 DE 3414137

(43) Veröffentlichungstag der Anmeldung:
23.10.85 Patentblatt 85/43

(45) Bekanntmachung des Hinweises auf die Patenterteilung:
31.01.90 Patentblatt 90/5

(84) Benannte Vertragsstaaten:
AT BE CH DE FR GB IT LI NL SE

(56) Entgegenhaltungen:
CH-A- 317 598
DD-A- 124 154
DE-U- 8 411 755
US-A- 2 203 943

MACHINES & TOOLING, Band 49, Nr. 4, April 1978,
Seiten 11-13, Melton Mobray, GB; A.P. SIROTENKO et
al.: "A dynamometric spindle unit for an adaptive
system of machine tool control"
idem
DEUTSCHE NORMEN DIN 69001, Teil 13, Oktober 1981,
Seiten 1-10, Berlin; "Mehrspindelbohrköpfe
(Bohrspindeln)" Seiten 1-10
DEUTSCHE NORMEN, DIN 69001, Teil 14, Oktober 1981,
Seiten 1-9, Berlin; "Mehrspindelbohrköpfe
(Spindelabdichtungen)"

(73) Patentinhaber: Kühbauch, Philipp jun., Kantstrasse 34,
D-6831 Plankstadt (DE)

(72) Erfinder: Kühbauch, Philipp jun., Kantstrasse 34,
D-6831 Plankstadt (DE)

(74) Vertreter: Weiss, Ursula, Dr., Gluckstrasse 3,
D-6800 Mannheim 1 (DE)

## Beschreibung

Die Erfindung betrifft einen Mehrspindelkopf, insbesondere zum Bohren, mit einer zur Aufnahme eines Werkzeugs dienenden in einem Gehäuse angeordneten Spindel, die in einem Hauptaxiallager, mindestens einem weiteren Axiallager und mindestens zwei Radiallagern gelagert ist.

Mehrspindelköpfe, insbesondere zur Bohrbearbeitung, sind beispielsweise in der DIN 69001 genormt. Sie enthalten mindestens zwei achsparallele Spindeln und mindestens eine Antriebswelle. Die Drehmomentübertragung zwischen Antriebswelle und Spindeln erfolgt z.B. durch Zahnräder direkt, oder über Zahnräder, die auf Zwischenwellen sitzen. Die werkzeugseitigen Spindelenden sind zur auswechselbaren Aufnahme von Werkzeugen ausgelegt.

Mehrspindelköpfe nach DIN 69001, oder ähnliche, leiten die Hauptaxialkraft der Bohrbearbeitung auf die werkzeugseitige Gehäusehälfte. Dies bedingt, daß entweder Abstützungen eingebaut werden, die einen erhöhten Bauaufwand bedeuten, oder eine erhöhte Durchbiegung der werkzeugseitigen Gehäusehälfte mit einer daraus resultierenden Funktionsstörung der Radial- und Axiallager bzw. Schiefstellung der Spindeln, in Kauf genommen werden. Dabei wird davon ausgegangen, daß die hintere Gehäusehälfte durch die Aufnahme des Mehrspindelkopfes abgestützt ist und sich damit bei gleicher Gehäusedicke und gleichen Kräften weniger durchbiegt als die werkzeugseitige Gehäusehälfte. Mehrspindelköpfe gemäß dem Oberbegriff des Patentanspruchs 1 sind zudem in der DD-PS 124 154 beschrieben.

Die Anordnung des Hauptaxiallagers vor dem werkzeugseitigen Radiallager bedingt eine ungünstige Verlängerung des auskragenden Teils der Spindel und damit eine Vergrößerung des Übersetzungsverhältnisses von Fehlern an Spindel, Gehäuse und Lagern auf die Position des werkzeugseitigen Spindelendes. Die Anbringung eines Laufringes für den werkzeugseitigen Dichtring führt zumindest bei Ausführungen nach DIN 69001 zu einer weiteren Verlängerung des werkzeugseitig auskragenden Teils der Spindel.

Durch die Trennung von Abstimm- und Abstandsfunktion und der dadurch bedingten seriellen Anordnung von zwei Abstimmscheiben und zwei Stufenringen als Abstandsscheiben ergibt sich eine erhöhte Gesamtbautiefe.

Die Lage des weiteren Axiallagers in der werkzeugseitigen Gehäusehälfte stellt eine ungünstige Nutzung der bei gleicher Gehäusedicke vorhandenen Bautiefe dar. Die axiale Sicherung und Führung der Zahnräder und Axiallager mit Distanzhülsen, Distanzringen, Stufenring, Sicherungsscheibe, Sechskantschraube und Zylinderstift bedingen eine große Anzahl von Einzelteilen und damit hohe Fertigungs-, Montage- und Lagerhaltungskosten.

Eine Vorspannung der Axiallager ist weder bei Mehrspindelköpfen nach DIN 69001 noch bei den aus der DD-PS 124 154 bekannten Mehrspindelköpfen vorgesehen. Zur Funktionssicherung der Axiallager ist diese nach Angaben der Lagerhersteller aber notwendig oder zumindest für die Lebensdauer der Lager günstig.

Der Erfindung liegt die Aufgabe zugrunde, einen beispielsweise aus der DD-PS 124 154 bekannten Mehrspindelkopf derart weiterzubilden, daß die weiterhin kurze und leichte Spindeleinheit bei geringen Herstellkosten führungsstabiler wird.

Vielfach ist nämlich z.B. bei Bearbeitungszentren die absolute Bautiefe und das Gewicht der Bohrköpfe vorgegeben, wobei gleichzeitig eine hohe Steifigkeit der Spindel erwünscht ist, um die Spindel exakt positionieren zu können.

Diese Eigenschaften sollten unter Beibehaltung des dem Stand der Technik entsprechenden werkzeugseitigen Spindelendes, wie z.B. nach DIN 55058, erreicht werden. Weiterhin sollte eine Vereinfachung der Konstruktion z.B. durch Zusammenfassen von Funktionen und Reduzierung der Abmessungen auf das absolut notwendige Maß, eine Gewichtsersparnis und die Reduktion der Herstellungs-, Lagerhaltungs- und Montagekosten erreichen.

Eine erfindungsgemäße Aufgabe ist mit ihren Weiterbildungen in den Patentansprüchen gekennzeichnet.

Bei einer derartigen erfindungsgemäßen Vorrichtung wird die Hauptaxialkraft in das werkzeugabgewandte Gehäuseteil eingeleitet. Das weitere Axiallager befindet sich im werkzeugseitigen Gehäuseteil. Die axiale Vorspannung kann deshalb durch ein gemeinsames Vorspann-Abstimmelement aufgebracht werden, das gleichzeitig als Abstandselement dient. Vorzugsweise werden in das Vorspann-Abstimmelement Federn eingelegt, so daß sich ein Abstimmen des Elementes erübrigt, da Längenunterschiede durch die unterschiedliche Einfederung aufgefangen werden. Gemäß einer besonders bevorzugten Ausführungsform wird das Zahnrad mit Sicherungsringen axial gesichert, wodurch sowohl der Abstimm- als auch der Montageaufwand verringert wird, da zum einen das notwendige Axialspiel der Zahnräder durch die Lage der Welleneinstiche erzeugt wird und nicht separat abgestimmt werden muß und zum anderen die Verringerung der dazu notwendigen Teile zu einer Verringerung der Montagezeit führt. Da die Spindeldurchmesser zwischen den Radiallagern kleiner oder gleich dem Spindeldurchmesser am werkzeugseitigen Spindelende sind, können alle Teile von der werkzeugabgewandten Seite der Spindel montiert werden und die Wahl des Spindelkopfdurchmessers ist beliebig.

Die Lauffläche des werkzeugseitigen Dichtringes kann in den Spindelkopf integriert werden und benötigt deshalb keinen zusätzlichen Teil der Spindel, was sowohl das Kragarmverhältnis, als auch die Gesamtbaulänge reduziert. Zum Wechsel kann er über das werkzeugseitige Spindelende ohne Demontage der Spindel ausgetauscht werden.

Die Zentrierung des Dichtringträgers kann je nach Bedarf über eine koaxiale Gehäusebohrung und einer damit etwas kürzerer Spindel oder über eine koaxiale Gehäusebohrung und einen Zentrierring und einem damit etwas verringerten Fertigungsaufwand aber einer längerer Spindel, zentriert werden.

Die Erfindung wird nun anhand der beigefügten Zeichnung näher erläutert. Es zeigt:

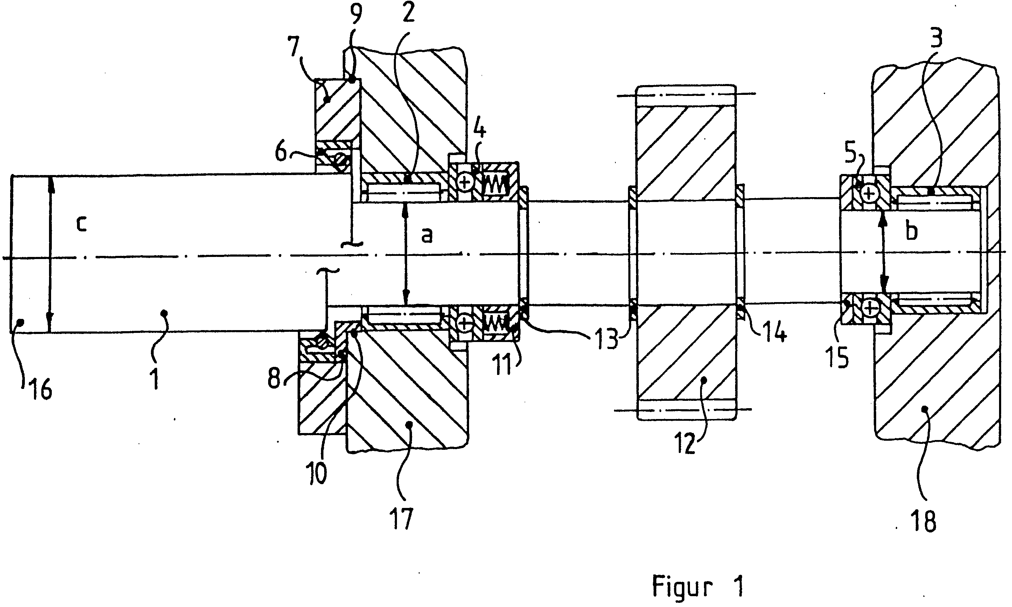

Figur 1 eine Spindel als Ausschnitt der Ansicht eines erfindungsgemäßen Mehrspindelkopfes.

Die zur Aufnahme eines Werkzeuges dienende Spindel 1 ist in dem Gehäuse 17 bzw. 18 angeordnet. Dieses Gehäuse kann einstückig sein, es kann sich jedoch auch um zwei oder mehr getrennte Gehäuseteile handeln. Diese Spindel 1 ist in dem Hauptaxiallager 5, dem weiteren Axiallager 4 und den beiden Radiallagern 2 und 3 gelagert. Das Hauptaxiallager ist zwischen den Radiallagern 2 und 3 angeordnet. Das Vorspann-Abstimmelement 11 belastet beide Axiallager 4 und 5. Der Spindeldurchmesser b zwischen den Radiallagern 2 und 3 ist kleiner als der Spindeldurchmesser a am werkzeugseitigen Radiallager 2. Wie aus Figur 1 zu erkennen ist, ist das Hauptaxiallager 5 in dem der werkzeugaufnehmenden Seite 16 abgewandten Gehäuseteil 18 angeordnet. Der Dichtring 6 wird von dem Dichtringträger 7 zentriert. Der Dichtringträger 7 wird seinerseits über die koaxiale Gehäusebohrung 9 zentriert. Oberhalb der Achse der Spindel 1 ist diese Ausführungsform dargestellt. Unterhalb der Achse der Spindel 1 ist die weitere Ausführungsform dargestellt, bei der der Dichtringträger über den Zentrierring 8 und die koaxiale Gehäusebohrung 10 zentriert ist. Die Spindel 1 wird von dem Zahnrad 12 angetrieben, das mit Sicherungsringen 13 und 14 axial gesichert ist. Das Vorspann-Abstimmelement 11 bringt die axiale Vorspannung auf und dient gleichzeitig als Abstandselement. In das Vorspann-Abstimmelement sind Federn eingelegt. Am Hauptaxiallager befindet sich ferner die Abstimmscheibe 15. Der Durchmesser a der Spindel 1 ist am Radiallager 2 kleiner als der Durchmesser c der Spindel 1 an der werkzeugaufnehmenden Seite 16.

Die Montage beginnt zweckmäßigerweise mit den Lagern 2, 3, 4 und 5, dem Abstimmen der Abstimmscheibe 15, Montage des Vorspann-Abstimmelementes 11, Sicherungsringe 13, Zahnrad 12 und Sicherungsring 14. Danach Montage von Zwischen- und Antriebswelle. Nach dem Zusammenbau der Gehäusehälften 17 und 18 erfolgt die Montage von Dichtringträger 7, der mit dem Dichtring 6 bereits bestückt ist. Wird ein Zentrierring 8 verwendet, so ist dieser vor der Montage der Spindel 1 in das Gehäuse 17 in die Gehäusebohrung 10 einzulegen.

Bei dieser Ausführungsform ergeben sich gegenüber einem Mehrspindelkopf nach DIN 69001 erheblich kürzere Montagezeiten, da nur ein Element abzustimmen ist (DIN 69001 enthält 2 Abstimmelemente für die Spindel), weniger Bauteile zu montieren sind und diese montagefreundlicher sind (kein Umbiegen von Sicherungsscheiben in engen Bohrungen, bzw. Einlegen und Herausnehmen von Abstimmscheiben in Bohrungen am werkzeugabgewandten Spindelende, wie bei DIN 69001). Die Fertigungs- und Lagerhaltungskosten sind durch die Reduktion der Bauelemente, der Zahl der Bearbeitungsflächen und deren Längen und dem Einatz handelsüblicher Bauelemente, wie Sicherungsringe, erheblich verringert. Da die vorhandene Bautiefe besser genutzt wird und eine Einsparung in der Dicke der Gehäusehälften möglich ist, ergibt sich gegenüber einer Ausführung nach DIN 69001 eine Bautiefenverringerung von mindestens 20% und eine Gewichtsersparnis von ebenfalls mindestens 20%. Mit diesem so fertiggestellten Mehrspindelkopf sind die selben Bohrbearbeitungen durchführbar, die mit einem Mehrspindelkopf nach DIN 69001 und gleichem Spindeldurchmesser a durchführbar sind. Wegen der erhöhten Steifigkeit des Systems Spindel-Gehäuse sind aber höhere Schnittgeschwindigkeiten und Vorschübe möglich. Wegen der verringerten Bautiefe und dem verringerten Gewicht können derartige Bohrköpfe in einer größeren Anzahl von Fällen verwendet werden, als Mehrspindelköpfe nach DIN 69001. Durch die dadurch mögliche Standardisierung sind weitere Einsparungen im Kostenbereich möglich.

Bezugszeichenliste

1   Spindel
2   Radiallager
3   Radiallager
4   Axiallager
5   Hauptaxiallager
6   Dichtring
7   Dichtringträger
8   Zentrierring
9   Gehäusebohrung
10   Gehäusebohrung
11   Vorspannelement
12   Zahnrad
13   Sicherungsring
14   Sicherungsring
15   Abstimmscheibe
16   werkzeugaufnehmende Seite der Spindel 1
17   Gehäuse
18   Gehäuse
a   Durchmesser der Spindel 1 am Radiallager 2
b   Durchmesser der Spindel 1 zwischen den Radiallagern 2 und 3
c   Durchmesser der Spindel 1 an der werkzeugaufnehmenden Seite 16

**Patentansprüche**

1. Mehrspindelkopf mit einer Mehrzahl von drehbaren Spindeln, von denen jede ein Werkzeug aufnimmt, und in wenigstens zwei Radiallagern, die im werkzeugseitigen und im werkzeugabgewandten Teil des Gehäuses abgestützt sind, und in einem dazwischen angeordneten Hauptaxiallager axial gelagert ist, das die Hauptaxialkraft der Bohrbearbeitung aufnimmt, und mit einem Antrieb für die Spindel, deren Durchmesser (b) zwischen den Radiallagern (2, 3) kleiner oder gleich dem Spindeldurchmesser auf der werkzeugseitigen Seite des äußeren Radiallagers (2) ist, dadurch gekennzeichnet, daß ein weiteres Axiallager (4) vorgesehen ist, daß das Hauptaxiallager (5) vom werkzeugabgewandten Teil (18) des Gehäuses und das weitere Axiallager (4) vom werkzeugseitigen Teil (17) des Gehäuses abgestützt ist, daß beide Axiallager (4, 5) zwischen den Radiallagern (2, 3) angeordnet sind, und daß zur Belastung der Axiallager am werkzeugseitigen Teil der Spindel ein Vorspann-Abstimmelement (11) zwischen den Axiallagern (4, 5) derart angeordnet ist, daß es beide Axiallager gegeneinander vorspannt.

2. Mehrspindelkopf nach Anspruch 1, dadurch gekennzeichnet, daß das Vorspann-Abstimmelement (11) mindestens eine Feder aufweist.

3. Mehrspindelkopf nach Anspruch 1 oder 2, dadurch gekennzeichnet, daß die Lauffläche des die Spindel (1) werkzeugseitig dichtenden Dichtringes (6) größer oder gleich dem Spindeldurchmesser (c) an der werkzeugaufnehmenden Seite (16) ist.

4. Mehrspindelkopf nach einem der Ansprüche 1 bis 3, dadurch gekennzeichnet, daß ein Dichtringträger (7) den Dichtring (6) zentriert, der seinerseits über eine koaxiale Gehäusebohrung (9) oder über eine koaxiale Gehäusebohrung (10) und einen Zentrierring (8) zentriert ist.

5. Mehrspindelkopf nach einem der Ansprüche 1 bis 4, dadurch gekennzeichnet, daß ein Antriebszahnrad (12) für die Spindel (1) mit Sicherungsringen (13, 14) axial gesichert ist.

**Claims**

1. Multispindle Drilling Head with a majority of turnable spindles of which every one of them picks up a tool, and beared in at least two radial bearings which are supported in the toolsided part of the housing and in the tool averted part of the housing and is axial beared in a main axial bearing which is placed in between and which takes up the main axial force of drilling and with a spindle drive which diameter (b) between the radial bearings (2, 3) is smaller or equal to the diameter of the spindle of the tool sided side of the radial bearing (2), characterized by a further axial bearing (4). To be provided with, that the main axial bearing (5) is supported from the averted part of the housing (18) and the further axial bearing (4) is supported from the toolsided part (17) of the housing, that both axial bearings (4, 5) are placed between the radial bearings (2, 3) and that for the load of the axial bearings at the tool sided part of the spindle a pre-load-adjustment element (11) is placed between the axial bearings (4, 5) in a way that is pre-loads both axial bearings against each other.

2. Multispindle Drilling Head according to demand 1, characterized by the pre-load-adjustment element (11) has at least one spring.

3. Multispindle Drilling .Head according to demand 1 or 2, characterized by the bearing surface of the spindle (1) toolsided sealing ring (6) is bigger or equal to the spindle diameter (c) on the tool carrying side (16).

4. Multispindle Drilling Head according to one of the demands 1–3, characterized by a sealing ring carrier (7) centers the sealing ring (6) which itself is centered through a coaxial stator bore (9) or through a coaxial stator bone (10) and a centering ring (8).

5. Multispindle Drilling Head according to one of the demands 1–4, characterized by a drive gear wheel (12) for the spindle (1) which is located axial by guard rings (13, 14).

**Revendications**

1. Tête multibroche munie de plusieurs broches rotatives dont chachune admet un outil, et tournant d'une part sur au moins deux paliers radiaux soutenus par la partie côté outil du boîtier et par la partie opposée à l'outil du boîtier, et d'autre part sur un palier à butée principal intermédiaire qui reçoit la force axiale principale des travaux de forage, munie d'une commande de broche dont le diamètre (b) entre les paliers radiaux (2, 3) est inférieur ou égal au diamètre de la broche côté outil du palier radial extérieur (2), caractérisée en ce qu'un palier à butée supplémentaire (4) est prévu, en ce que le palier à butée principal (5) est soutenu par la partie opposée à l'outil du boîtier (18), et en ce que le palier à butée supplémentaire (4) est soutenu par la partie côté du boîtier (17), et en ce que les deux paliers à butée (4, 5) se trouvent placés entre les paliers radiaux (2, 3), et en ce qu'un élément de réglage de prétension (11) est disposé entre les paliers à butée (4, 5) de façon telle qu'il mette en prétension les deux paliers à butée l'un contre l'autre.

2. Tête multibroche d'après la revendication 1, caractérisée en ce que l'élément de réglage de prétension (11) présente au moins un ressort.

3. Tête multibroche d'après les revendications 1 ou 2, caractérisée en ce que la surface de roulement de l'anneau de joint (6) bouchant la broche côté outil est supérieure ou égale au diamètre de la broche (c) côté outil (16).

4. Tête multibroche d'après les revendications 1 à 3, caractérisée en ce que l'anneau de joint (6) est centré par un support (7) qui est lui-même centré par l'intermédiaire d'un alésage coaxial du boîtier (9) ou par l'intermédiaire d'un alésage coaxial du boîtier (10) et un anneau de centrage (8).

5. Tête multibroche d'après les revendications 1 à 4, caractérisée en ce qu'une roue dentée motrice pour la broche (1) est arrêtée axialement par des circlips (13, 14).

EP 0 158 868 B1

Figur 1